Europäisches Patentamt

European Patent Office

Office européen des brevets

(19)

(11) Numéro de publication : **0 066 841**
**B1**

(12) **FASCICULE DE BREVET EUROPÉEN**

(45) Date de publication du fascicule du brevet :
10.09.86

(51) Int. Cl.⁴ : **G 01 N 23/02, G 21 C 13/06**

(21) Numéro de dépôt : **82104848.5**

(22) Date de dépôt : **03.06.82**

(54) Bouchon pour ouverture d'accès d'une source radiographique de contrôle dans une tuyauterie ou un appareil.

(30) Priorité : **10.06.81 FR 8111367**

(43) Date de publication de la demande :
**15.12.82 Bulletin 82/50**

(45) Mention de la délivrance du brevet :
**10.09.86 Bulletin 86/37**

(84) Etats contractants désignés :
**BE DE FR GB IT NL**

(56) Documents cités :
**FR-A- 2 308 758**
**US-A- 2 539 102**

(73) Titulaire : **STEIN INDUSTRIE Société anonyme dite:**
**19-21, Avenue Morane Saulnier B.P. 74**
**F-78141 Velizy-Villacoublay (FR)**

(72) Inventeur : **Bobichon, Jacques**
**61, Chemin des Vaux Mourants**
**F-91370 Verrieres le Buisson (FR)**
Inventeur : **Leroy, Pierre-Loup**
**33, rue du Weirs**
**F-59158 Flines Lez Mortagne (FR)**

(74) Mandataire : **Weinmiller, Jürgen et al**
**Zeppelinstrasse 63**
**D-8000 München 80 (DE)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un bouchon pour ouverture d'accès d'une sonde radiographique de contrôle dans une tuyauterie ou un appareil, notamment en vue du contrôle de soudures à proximité de cette ouverture.

Les bouchons connus pour ouvertures d'accès de sonde radiographiques sont à fond plein, tel que celui décrit dans le document US-A-2 539 102, et soudés sur la tuyauterie ou l'appareil correspondant après contrôle par la sonde radiographique de la ou des soudures à examiner. Ils ne sont plus réutilisables si l'on veut vérifier à nouveau les soudures après un certain temps de fonctionnement de la tuyauterie ou de l'appareil. Il faudrait en effet éliminer la soudure avant de pouvoir dévisser le bouchon, ce qui risque de dégrader la surface du tube ou de l'appareil. Lorsque l'on veut effectuer un nouveau contrôle, on perce donc une nouvelle ouverture dans la paroi, puis referme cette ouverture après le contrôle à l'aide d'un nouveau bouchon, également non réutilisable. Ceci est une opération relativement longue et coûteuse, et entraîne des perçages successifs de la paroi en des points rapprochés.

La présente invention a pour but de remédier à ces inconvénients, et de procurer un bouchon pour de telles ouvertures d'accès qui permette d'effectuer des contrôles par une sonde radiographique un nombre de fois aussi élevé qu'on le désire et en un temps très court.

Le bouchon selon l'invention est caractérisé en ce qu'il comprend un élément cylindrique externe à fond ouvert, à filetage interne, ledit élément cylindrique externe étant soudé sur la paroi de la tuyauterie ou de l'appareil en faisant saillie, par un premier bord supérieur, sur ladite paroi ; un élément cylindrique interne à fond plein, à filetage externe, ledit élément cylindrique interne présentant un deuxième bord supérieur étant vissé, par son filetage externe, sur le filetage interne dudit élément cylindrique externe et soudé sur lèvres par ledit deuxième bord supérieur audit premier bord supérieur et muni de moyens internes permettant de le dévisser.

De préférence, ces moyens internes permettant de dévisser l'élément cylindrique interne sont constitués par un filetage pratiqué à l'intérieur de cet élément cylindrique interne, le pas de ce filetage étant de sens opposé à celui du pas du filetage externe dudit élément cylindrique interne.

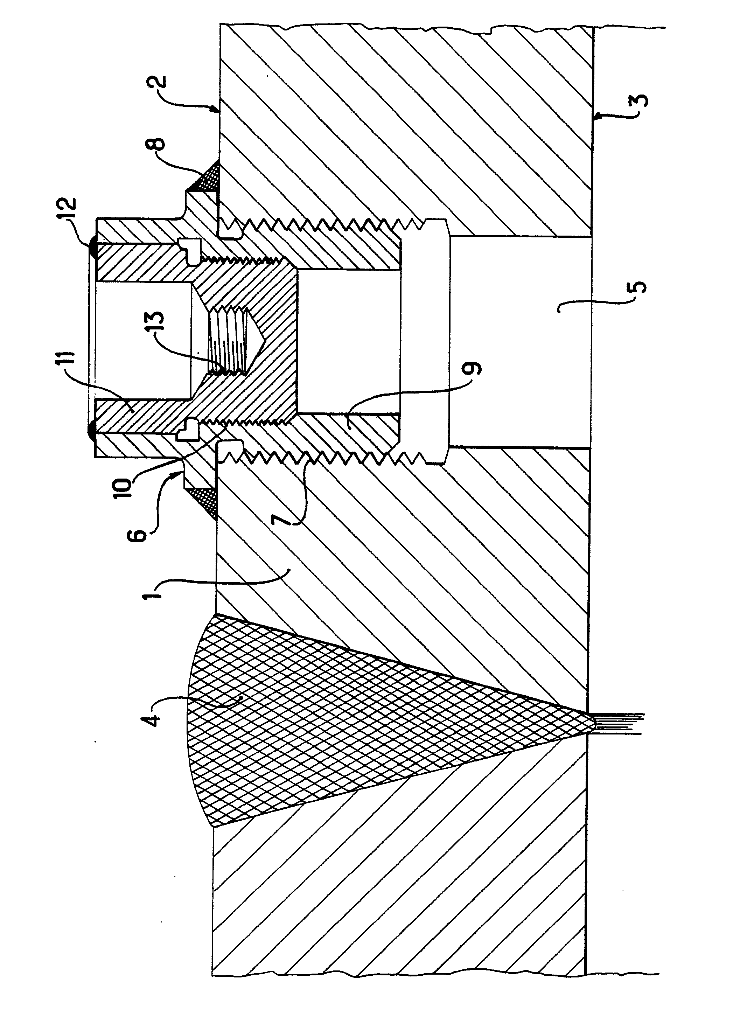

Il est décrit ci-après, à titre d'exemple et en référence à la figure du dessin annexé, un bouchon pour contrôle radiographique de soudures dans une tuyauterie de centrale de production d'énergie électrique.

La paroi 1 de la tuyauterie comporte une surface externe 2 et une surface interne 3. Cette tuyauterie comporte un cordon de soudure 4 dont on désire vérifier périodiquement la compacité par contrôle radiographique. A cet effet, la paroi est percée d'un trou cylindrique 5. Un premier bouchon 6 est fixé dans l'alésage 7 du trou 5, par exemple par vissage dans un taraudage. Il est fixé par ailleurs à la paroi par une soudure circonférentielle 8. La partie interne 9 du bouchon fixe 6 est munie d'un filetage interne 10, dans lequel est vissé le filetage externe du bouchon amovible 11. Ce dernier est fixé au bouchon fixe 6 par une soudure sur lèvres 12. Il est muni par ailleurs d'un filetage interne à pas à gauche 13 avec lequel peut venir en prise un outil d'extraction, constitué par une vis à pas à gauche.

Lorsque l'on veut effectuer les contrôles radiographiques successifs, on opère comme suit.

Après avoir fixé le bouchon 6 dans le trou 5, on effectue le premier contrôle radiographique. Puis on retire la sonde radiographique, graisse le filetage externe du bouchon amovible 11 à l'aide d'une graisse résistant aux hautes températures, par exemple une graisse graphitée ou une graisse silicone, et visse ce bouchon dans le bouchon fixe. Puis on soude les bords des deux bouchons par la soudure sur lèvres 12.

Lorsque l'on veut procéder à un nouveau contrôle, on élimine la soudure sur lèvre 12, de préférence par meulage, cette opération pouvant être très rapide. On engage une clé à filetage à pas à gauche correspondant à celui du filetage interne 13 du bouchon amovible dans ce filetage, puis dévisse le bouchon amovible 11 du bouchon fixe et le retire. On peut alors introduire la sonde radiographique et effectuer le contrôle de la soudure.

Après exécution du contrôle radiographique, on retire la sonde, revisse le bouchon amovible dans le bouchon fixe, puis l'immobilise par une nouvelle soudure sur lèvres. L'opération peut être renouvelée de nombreuses fois.

Bien que le bouchon à deux éléments qui vient d'être décrit en référence à la figure du dessin paraisse la forme de réalisation préférable de l'invention, on comprendra que diverses modifications peuvent lui être apportées, certains de ses éléments pouvant être remplacés par d'autres qui joueraient le même rôle technique. En particulier, le filetage à pas à gauche du bouchon amovible et la clé correspondante pour son extraction peuvent être remplacés par tous autres moyens qui permettraient d'exercer sur ce bouchon amovible un effort assurant son dévissage, par exemple par un enclenchement à baïonnette.

## Revendications

1. Bouchon pour ouverture (5) d'accès d'une sonde radiographique de contrôle dans une tuyauterie ou un appareil (1), caractérisé en ce qu'il comprend un élément (6) cylindrique externe à fond ouvert, à filetage (10) interne, ledit élément (6) cylindrique externe étant soudé sur la paroi de la tuyauterie ou de l'appareil (1) en faisant saillie, par un premier bord supérieur, sur ladite paroi ; un élément (11) cylindrique interne à fond plein, à filetage externe, ledit élément (11) cylindrique interne présentant un deuxième bord supérieur étant vissé, par son filetage externe, sur le filetage (10) interne dudit élément (6) cylindrique externe et soudé sur lèvres (12) par ledit deuxième bord supérieur audit premier bord supérieur et muni de moyens (13) internes permettant de le dévisser.

2. Bouchon selon la revendication 1, caractérisé en ce que lesdits moyens (13) internes permettant de dévisser l'élément (11) cylindrique interne sont constitués par un filetage pratiqué à l'intérieur de cet élément (11) cylindrique interne, le pas de ce filetage étant de sens opposé à celui du pas du filetage externe dudit élément (11) cylindrique interne.

## Claims

1. A plug for an inspection hole (5) to give an X-ray inspection probe access to the inside of a pipe or apparatus (1), characterized in that the plug comprises a cylindrical outer component (6) having an open bottom and an inside screw thread (10), said cylindrical outer component (6) being welded to the wall of said pipe or apparatus (1) and having a first upper edge protruding from said wall, and a cylindrical inner component (11) having a blind hole and an outside screw thread, said cylindrical inner component (11) being screwed via its outside screw thread into the inside screw thread (10) of the cylindrical outer component (6) and having a second upper edge which is welded around its periphery (12) to the first upper edge, said cylindrical inner component being equipped with inner means (13) which allow the cylindrical inner component to be unscrewed.

2. A plug according to claim 1, characterized in that the inner means (13) allowing the cylindrical inner component (11) to be unscrewed are constituted by a screw thread inside said cylindrical inner component, the pitch of said screw thread being of the opposite hand to the pitch of the outside thread on said cylindrical inner component (11).

## Patentansprüche

1. Stopfen für die Zugangsöffnung (5) einer radiographischen Prüfsonde in einer Leitung oder einem Gerät (1), dadurch gekennzeichnet, daß er ein äußeres zylindrisches Element (6) mit offenem Boden und mit Innengewinde (10) aufweist, wobei dieses äußere zylindrische Element (6) an die Wand der Leitung oder des Geräts (1) angeschweißt ist und mit einem ersten oberen Rand über die Wand vorsteht, und ein inneres zylindrisches Element (11) mit geschlossenem Boden und Außengewinde aufweist, wobei dieses innere zylindrische Element (11), das einen zweiten oberen Rand aufweist, mit seinem Außengewinde auf das Innengewinde (10) des äußeren Elements (6) aufgeschraubt ist und der zweite obere Rand mit dem ersten oberen Rand über eine Lippennaht (12) verschweißt ist und wobei das innere zylindrische Element (11) Mittel (13) im Inneren aufweist, die sein Abschrauben ermöglichen.

2. Stopfen nach Anspruch 1, dadurch gekennzeichnet, daß die Mittel (13) im Inneren, die ein Abschrauben des inneren zylindrischen Elements (11) ermöglichen, aus einem Gewinde bestehen, das im Inneren des inneren zylindrischen Elements (11) angebracht ist und dessen Gewindesteigung der des Außengewindes des inneren Elements (11) entgegengesetzt ist.